# EUROPEAN PATENT SPECIFICATION

(11) **EP 4 004 635 B1**
(45) Date of publication and mention of the grant of the patent: **29.10.2025**
(21) Application number: 18905601.3
(22) Date of filing: 20.06.2018
(51) Int. Cl.: G02C 5/22, G02C 5/00, G02C 5/08, G02C 5/14, G02C 5/16, G02C 5/20, G02C 3/04

(54) **SPECTACLES WITH DUAL SALON AND TRADITIONAL CONFIGURATIONS**
BRILLE MIT DOPPEL-LORGNETTE-KONFIGURATION UND HERKÖMMLICHER KONFIGURATION
LUNETTES À DOUBLE CONFIGURATION LORGNETTES ET CLASSIQUE

(30) Priority: 01.06.2018 US 201815995625
(43) Date of publication of application: 01.06.2022
(73) Proprietor: Bunny Eyez, LLC, Bethpage NY 11714 (US)
(72) Inventor: HUTT, Jennifer, Roslyn Harbor, NY 11576 (US); FRITZ, Stacy, Roslyn Harbor, NY 11576 (US); GLUCK, Andrea, Bethpage, NY 11714 (US)
(74) Representative: Busca, Andrea
(86) International application number: PCT/US2018/038417
(87) International publication number: WO 2019/156704

(56) References cited:
- CN-U- 202 563 181
- CN-U- 203 882 037
- US-A- 4 547 048
- US-A- 5 187 504
- US-A- 5 229 795
- US-A- 5 751 393
- US-A1- 2006 256 282
- US-A1- 2008 074 609
- US-A1- 2014 168 599
- US-A1- 2016 341 976
- US-A1- 2016 341 976
- US-B1- 6 464 353

## Description

### BACKGROUND

Traditional eyeglasses have two positions: A folded position and an extended position. FIGS. 1 and 2 show the former and FIG. 3 shows the later. The folded position is for eyeglass transportation and storage. In the extended position, the eyeglass arm earpiece loops over and behind the wearer's ear, securing the glasses to the wearer's face. This is so convenient that the design is little-changed from its early 1700s introduction by Edward Scarlett and James Ayscough, who invented eyeglass arms and their foldability respectively in 1730 and 1752.

The traditional eyeglass advantage is not only that it holds the lenses in front of the eyes while the wearer's hands are free, but it also holds the lenses in a plane in front of the wearer's eyes, allowing a user to move their eyes and retain the same optical advantage through the lenses.

One of the problems with early eyeglass designs is that as people age, they become more far-sighted and may thus lose both their ability to see near and far. Such a challenge presented a challenge to early eyeglass manufacturers, who could only produce one appropriate lens to help their wearers. As is widely known, America's famous polymath Benjamin Franklin solved this problem with his invention of the bifocals in the mid to late 1700s.

In roughly the same time period, George Adams invented the lorgnette spectacle that had no arms but instead included a handle that allowed the user to place the corrective lenses in front of their eyes in use and remove them when not. These types of glasses proved popular in theater settings and masquerades.

Each of these inventions, the traditional, the bifocal, and the lorgnette eyeglasses share certain challenges that no single eyeglass addresses. The traditional eyeglass works well but in situations where a user's ears are not accessible (during hair dying, hair drying, surgery, etc.), a person does not want to give up their ability to see and read. The bifocal (and today's progressive lenses) solve the challenge of those who want to see both near and far, but a person who wants to look over their glasses must allow the glasses to slide down their nose to look over them, in a stereotypically "disapproving teacher" pose. This way of wearing glasses down-the-nose makes them prone to falling off. Finally, the lorgnette, while stylish and functional in the hair salon, has a valuable functionality but people only call upon in certain circumstances.

Thus, there is a need for a stylish yet functional eyeglass design that solves some or all of the above challenges. US 2014/168599 A1 describes eyewear having an adjustable principal lens plane.

### SUMMARY OF THE EMBODIMENTS

The invention is defined as in claim 1. Preferred embodiments are defined in the dependent claims. The multiuse eyeglasses include a frame that holds two lenses and arms that extend from the frame. The arms include a first axis of rotation that is generally perpendicular to the arms and a second axis of rotation that is orthogonal to the first axis of rotation and allows the arms to be rotated downwards relative to the frame.

### BRIEF DESCRIPTION OF THE DRAWINGS

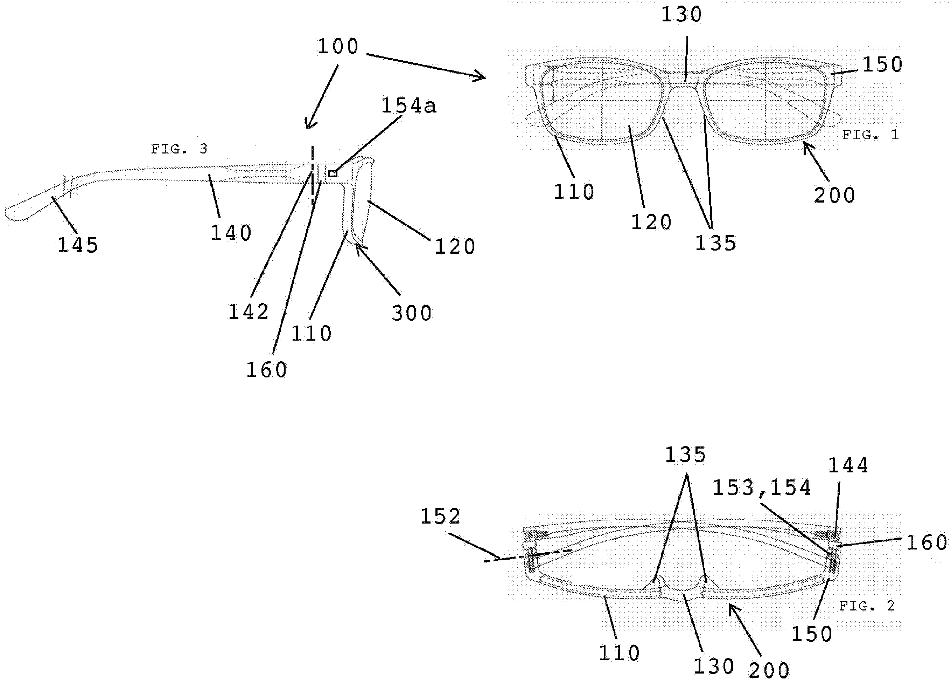

FIG. 1 shows a front elevation view of the multiuse eyeglasses in the traditional folded position.
FIG. 2 shows a top view of the multiuse eyeglasses in the traditional folded position.
FIG. 3 shows a side view of the multiuse eyeglasses in the traditional extended position.

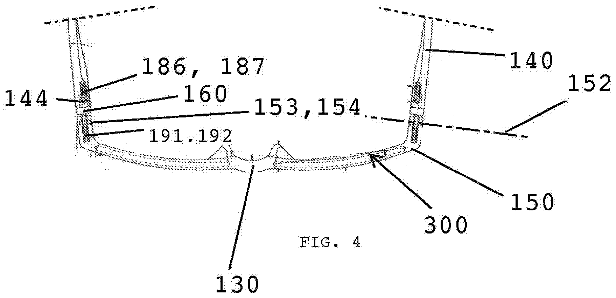

FIG. 4 shows a top view of the multiuse eyeglasses in the traditional extended position.

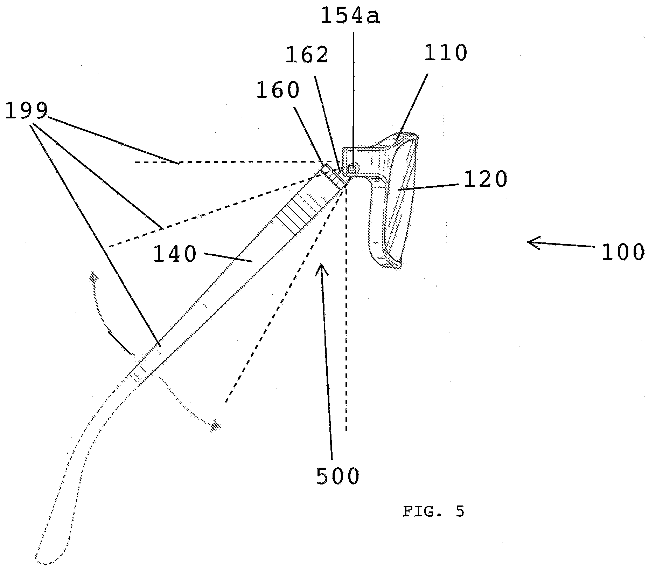

FIG. 5 shows a side view of the multiuse eyeglasses in a hybrid extended position.

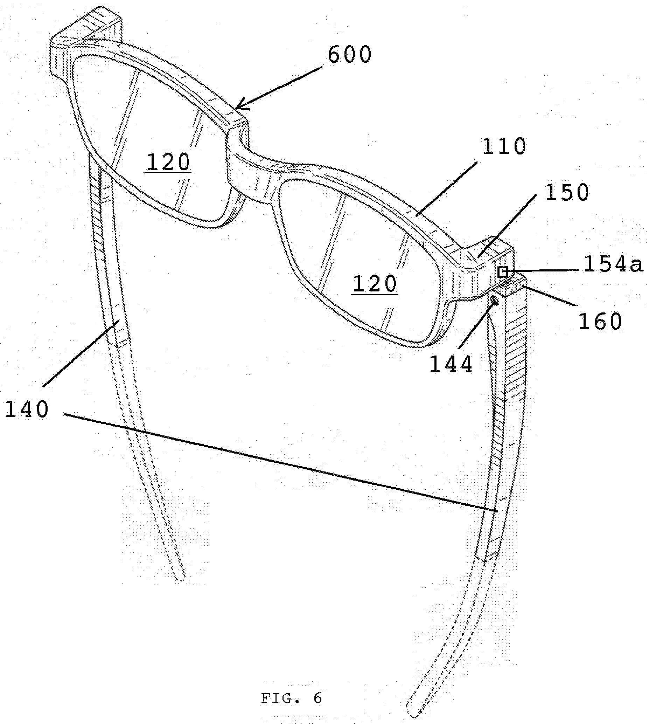

FIG. 6 shows a perspective view of the multiuse eyeglasses in a lorgnette extended position.

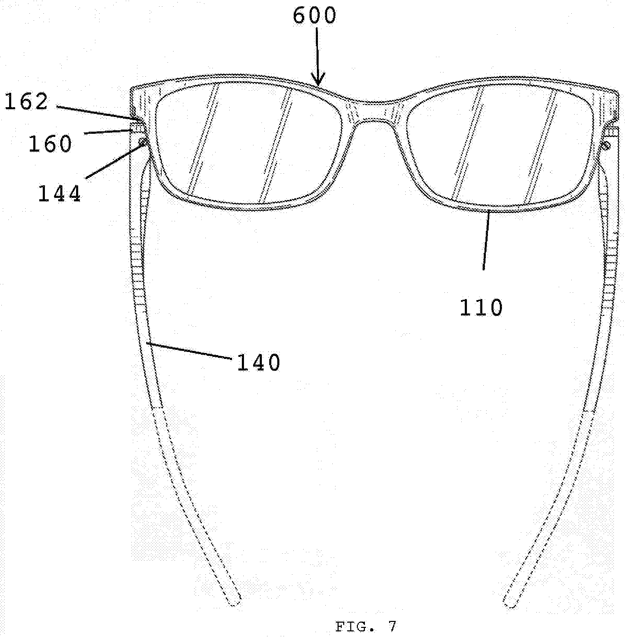

FIG. 7 shows a front view of the multiuse eyeglasses in a lorgnette extended position.

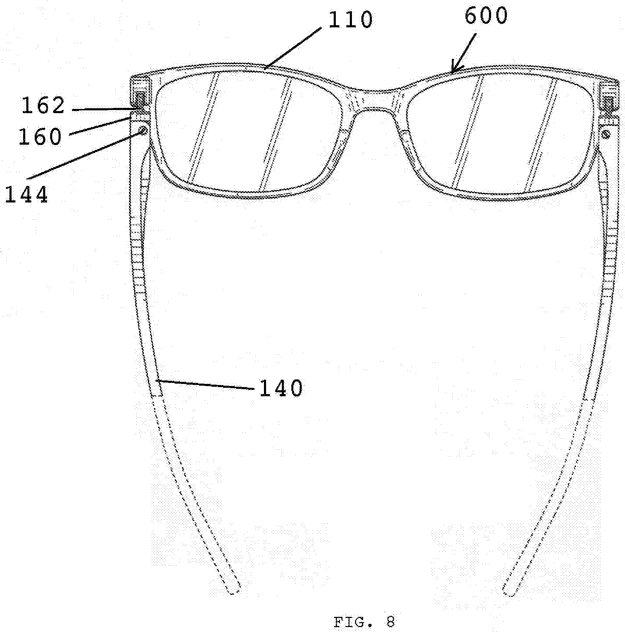

FIG. 8 shows a rear view of the multiuse eyeglasses in a lorgnette extended position.

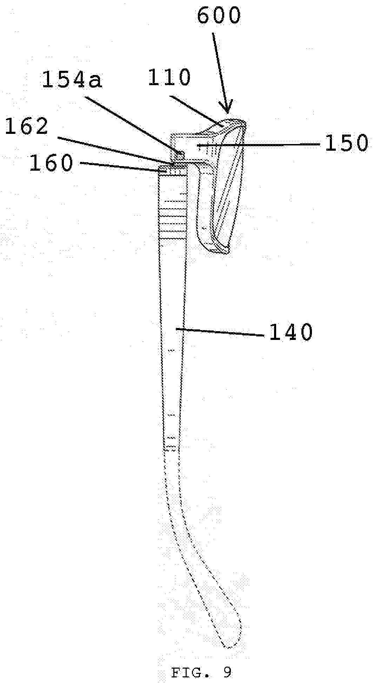

FIG. 9 shows a side view of the multiuse eyeglasses in a lorgnette extended position.

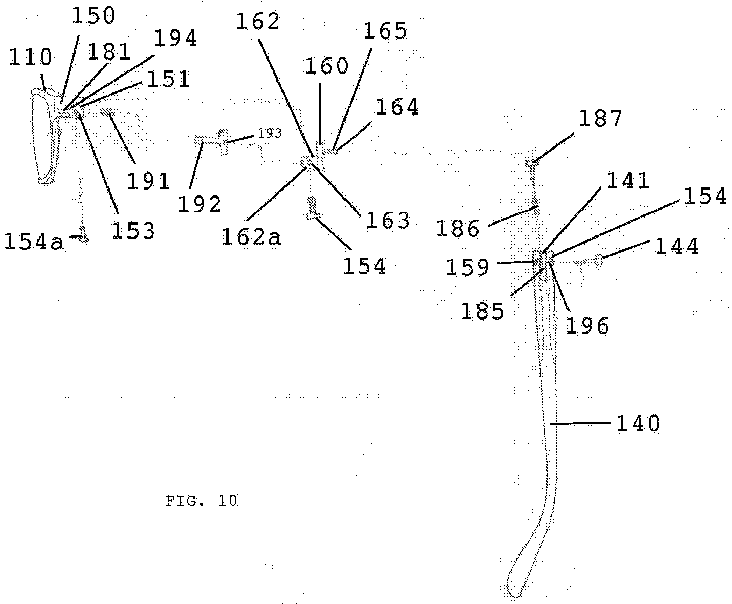

FIG. 10 shows a side exploded view of the multiuse eyeglasses, with certain attachment elements shown in profile.

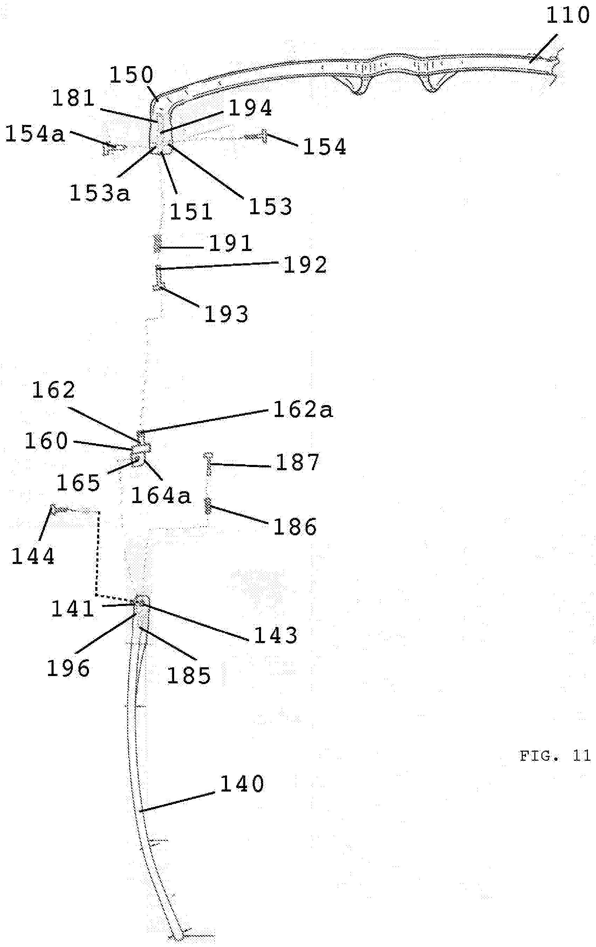

FIG. 11 shows a top exploded view of the multiuse eyeglasses, with certain attachment elements shown in profile.

Certain dashed lines within the figures are meant to show hidden features or moving/adjustable elements, and some elements may have been shown enlarged or reduced in order to show details.

### DETAILED DESCRIPTION OF THE EMBODIMENTS

The multiuse eyeglasses 100 described herein move between a traditional folded configuration 200 (FIGS. 1 and 2), traditional extended configuration 300 (FIGS. 3 and 4), hybrid extended configuration (500), and lorgnette (or "salon") extended configuration 600 (FIGS. 6-9). Hybrid folded and lorgnette folded configurations are also possible by folding in the arms; these configurations may be useful when attempting to fold the eyeglasses to fit into certain spaces.

As best seen in FIGS. 3 and 4, the arms 140 have a first axis of rotation 142 that is generally perpendicular to the arms 140 and a second axis of rotation 152 that is orthogonal to the first axis of rotation 142 and allows the arms 140 to be rotated downwards relative to the frame 110.

With reference to all of the figures, although some figures show certain components more clearly than others, the traditional eyeglasses 100 parts are readily recognizable. The eyeglass frames 110 hold lenses 120 separated by a bridge 130 with a nosepiece 135. The eyeglass frames 110 may come in many styles and the one shown is merely for illustrative purposes and is in no way limiting to the extension of the application to other frame styles.

Arms or temples 140 attach the eyeglass frames 110 at end pieces 150. The arms 140 may have tips 145 that wrap around and behind a wearer's ear.

The multiuse eyeglasses 100 include a hinge element 160 that joins the frame 110 to the arms 140 and may be best appreciated in the exploded views of FIGS. 10 and 11. The hinge element 160 includes a frame engagement portion 162 that engages the frame 110 and an arm engagement portion 164 that engages the arms 140. The hinge element 160 engages the frame 110 through a hinge receiving slot 151 that receives the frame engagement portion 162, and it engages the arms 140 through a hinge receiving channel 141 that receives the arm engagement portion 164.

The frame 110 may further include a frame pivot screw receiving hole 153 that receives a frame pivot screw 154 that defines the second axis of rotation 152 (and allows the glasses to move between the traditional and lorgnette positions). The frame pivot screw 154 may be threaded at its terminal end to engage the threading on the frame 110 or as shown, it may engage an internally threaded nut 154a.

The arms 140 may include arm pivot screw receiving holes 143 that receive arm pivot screws 144 that define the first axis of rotation 142. The arm pivot screws 144 may engage a nut or the arm pivot screw receiving holes 143 may have internal threading 159 at an end thereof to engage the screws 144.

These holes 153, 143 are best seen in the exploded views and may include a shelf 165 or 196 that engages biasing pins to be discussed hereafter.

Tracing the path of engagement of the frame pivot screw 154, the frame pivot screw 154 passes through a first portion of the frame pivot screw receiving hole 153, through a hinge element frame pivot screw receiving hole 163 and into a second portion of the frame pivot screw receiving hole 153 or the internally threaded nut 154a.

Similarly tracing the path of the arm pivot screw 144, the arm pivot screw 144 passes through a first portion of the arm pivot screw receiving hole 143, through a hinge element arm pivot screw receiving hole 165 and into a second portion of the arm pivot screw receiving hole 143 another internally threaded nut.

To assist in movement between distinct, i.e., not fluid movement, multiple predetermined arm positions 199 shown in phantom in FIG. 5, the hinge element frame engagement portion 162 includes teeth 162a and the frame 110 has a frame biasing spring receiving hole 181 that receives a frame biasing spring 191 that biases a tooth engaging pin 192 with a biasing channel 193. The frame biasing spring 191 biases the biasing channel 193 against the hinge element's 160 teeth 162a such that the teeth 162a engage within the biasing channel 193 to hold the arms in one of the multiple positions 199 about the second axis of rotation 152 and provide an audible "click" so the user knows how many clicks from the terminal traditional or lorgnette configuration they moved the arms 140 relative to the frame 110. Both hinge elements 160 for each of the arms 140 would have the same number of teeth and teeth spacing, which would ensure that the arms 140 on each side of the frame 110 would be at the same angle so the glasses wear evenly.

At this point, one feature of the glasses 100 may be appreciated. Looking at FIG. 5, the glasses 100 may be worn in a hybrid configuration 500. This may occur when a wearer wants to look over the glasses 100 and/or down below at something they are reading. Further, it is possible to adjust the frame 110 relative to the arms 140 while the wearer is wearing the glasses, that is, it is not necessary to remove the glasses 100 to adjust the angle of the lenses 120 to the wearer's eyes.

Returning to the details of the eyeglasses 100, the tooth engaging pin 192 may have a slightly larger head than its corresponding pin body, and this head pushes against the frame biasing spring 191 and also is stopped by a frame shelf 194 within the frame 110.

For traditional arm and frame engagement feel, the hinge element arm engagement portion 164 may include a cam 164a. and the arms may have arm biasing spring receiving holes 185 that receive arm biasing springs 186 that bias a cam engaging pin 187 against the cam 164a such that the arms 140 have a cam-biased movement between a folded configuration 200 and an extended configuration 300 as the arms rotate about the first axis of rotation 142. Movement of the arms 140 in this way would be familiar to most eyeglass wearers.

The figures show a single style of eyeglasses, but it should be clear that metal frames, frames with different shapes, and other material choices would be possible. Further, this design may have particular advantages in sunglasses, where the user may want to lower the frames in the hybrid configuration while wearing them in order to read their phone or see something in a darker space.

While the invention has been described with reference to the embodiments above, a person of ordinary skill in the art would understand that various changes or modifications may be made thereto without departing from the scope of the claims.

## Claims

1. Multiuse eyeglasses (100), comprising:
a frame (110) that holds two lenses (120);
arms (140) that extend from the frame (110), each arm (140) having a first axis of rotation (142) that is generally perpendicular to each arm (140) and a second axis of rotation (152) that is orthogonal to the first axis of rotation (142) and allows each arm (140) to be rotated downwards relative to the frame (110) for wear by a user at multiple positions (199) of the arms (140); and
hinge elements (160) that join the frame (110) to the arms (140),
wherein each of the hinge elements (160) comprises a frame engagement portion (162) that engages the frame (110) and an arm engagement portion (164) that engages the arms (140),
wherein the hinge element frame engagement portion (162) includes teeth (162a),
wherein the frame (110) further includes frame biasing spring receiving holes (181) that receive frame biasing springs (191) that bias tooth engaging pins (192), and wherein the frame biasing springs (191) bias biasing channels (193) on the tooth engaging pins (192) against the hinge elements' teeth (162a) such that the teeth (162a) engage within the biasing channels (193) to hold the arms (140) in one of the multiple positions (199) about the second axis of rotation (152) as the arms (140) move between a traditional configuration and an extended configuration.

2. The multiuse eyeglasses (100) of claim 1, wherein the frame (110) further includes hinge receiving slots (151) that receive the frame engagement portion (162) of the hinge elements (160).

3. The multiuse eyeglasses (100) of claim 2, wherein the arms (140) include hinge receiving channels (141) that receive the arm engagement portion (164) of the hinge elements (160).

4. The multiuse eyeglasses (100) of claim 3, wherein the frame (110) further includes frame pivot screw receiving holes (153) that receive frame pivot screws (154) that define the second axis of rotation (152) of the arms (140), and wherein the arms (140) include arm pivot screw receiving holes (143) that receive arm pivot screws (144) that define the first axis of rotation (142) of the arms (140).

5. The multiuse eyeglasses (100) of claim 4, wherein the frame pivot screws (154) are received in internally threaded nuts (154a) that extend into nut receiving channels.

6. The multiuse eyeglasses (100) of claim 4, wherein the hinge elements (160) include frame pivot screw receiving holes (163) that receive the frame pivot screws (154), and further include arm pivot screw receiving holes (165) that receive the arm pivot screws (144).

7. The multiuse eyeglasses (100) of claim 1, wherein the hinge element arm engagement portion (164) include cams (164a).

8. The multiuse eyeglasses (100) of claim 7, wherein the arms (140) comprise arm biasing spring receiving holes (185) that receive arm biasing springs (186) that bias cam engaging pins (187), wherein the arm biasing springs (186) bias the cam engaging pins (187) against the cams (164a) such that the arms (140) have a cam-biased movement between a folded configuration (200) and an extended configuration (300) as the arms (140) rotate about the first axis of rotation (142).

9. The multiuse eyeglasses (100) of claim 1, wherein the arms (140) are held in place at multiple predetermined positions (199) as the arms (140) rotate.

## Patentansprüche

1. Mehrzweckbrille (100), umfassend:
ein Gestell (110), das zwei Gläser (120) hält;
Bügel (140), die sich von dem Gestell (110) erstrecken, wobei jeder Bügel (140) eine erste Drehachse (142), die im Allgemeinen senkrecht zu jedem Bügel (140) ist, und eine zweite Drehachse (152) aufweist, die orthogonal zu der ersten Drehachse (142) ist und es ermöglicht, dass jeder Bügel (140) relativ zu dem Gestell (110) nach unten gedreht wird, um von einem Benutzer an mehreren Positionen (199) der Bügel (140) getragen zu werden; und
Scharnierelemente (160), die das Gestell (110) mit den Bügeln (140) verbinden,
wobei jedes der Scharnierelemente (160) einen Gestelleingriffsabschnitt (162), der mit dem Gestell (110) in Eingriff steht, und einen Bügeleingriffsabschnitt (164), der mit den Bügeln (140) in Eingriff steht, umfasst,
wobei der Scharnierelementgestell-Eingriffsabschnitt (162) Zähne (162a) einschließt,
wobei das Gestell (110) ferner Gestellvorspannfeder-Aufnahmelöcher (181) einschließt, die Gestellvorspannfedern (191) aufnehmen, die Zahneingriffsstifte (192) vorspannen
und wobei die Gestellvorspannfedern (191) Vorspannkanäle (193) an den Zahneingriffsstiften (192) gegen die Zähne (162a) der Scharnierelemente vorspannen, so dass die Zähne (162a) in die Vorspannkanäle (193) eingreifen, um die Bügel (140) in einer der mehreren Positionen (199) um die zweite Drehachse (152) zu halten, wenn sich die Bügel (140) zwischen einer herkömmlichen Konfiguration und einer ausgefahrenen Konfiguration bewegen.

2. Mehrzweckbrille (100) nach Anspruch 1, wobei das Gestell (110) ferner Scharnieraufnahmeschlitze (151) einschließt, die den Gestelleingriffsabschnitt (162) der Scharnierelemente (160) aufnehmen.

3. Mehrzweckbrille (100) nach Anspruch 2, wobei die Bügel (140) Scharnieraufnahmekanäle (141) einschließen, die den Bügeleingriffsabschnitt (164) der Scharnierelemente (160) aufnehmen.

4. Mehrzweckbrille (100) nach Anspruch 3, wobei das Gestell (110) ferner Gestellschwenkschrauben-Aufnahmelöcher (153) einschließt, die Gestellschwenkschrauben (154) aufnehmen, die die zweite Drehachse (152) der Bügel (140) definieren, und wobei die Bügel (140) Bügelschwenkschrauben-Aufnahmelöcher (143) einschließen, die Bügelschwenkschrauben (144) aufnehmen, die die erste Drehachse (142) der Bügel (140) definieren.

5. Mehrzweckbrille (100) nach Anspruch 4, wobei die Gestellschwenkschrauben (154) in Innengewindemuttern (154a) aufgenommen sind, die sich in Mutteraufnahmekanälen erstrecken.

6. Mehrzweckbrille (100) nach Anspruch 4, wobei die Scharnierelemente (160) Gestellschwenkschrauben-Aufnahmelöcher (163) einschließen, die die Gestellschwenkschrauben (154) aufnehmen, und ferner Bügelschwenkschrauben-Aufnahmelöcher (165) einschließen, die die Bügelschwenkschrauben (144) aufnehmen.

7. Mehrzweckbrille (100) nach Anspruch 1, wobei der Scharnierelementbügel-Eingriffsabschnitt (164) Nocken (164a) einschließt.

8. Mehrzweckbrille (100) nach Anspruch 7, wobei die Bügel (140) Bügelvorspannfeder-Aufnahmelöcher (185) umfassen, die Bügelvorspannfedern (186) aufnehmen, die Nockeneingriffsstifte (187) vorspannen, wobei die Bügelvorspannfedern (186) die Nockeneingriffsstifte (187) gegen die Nocken (164a) vorspannen, sodass die Bügel (140) eine nockenvorgespannte Bewegung zwischen einer zusammengeklappten Konfiguration (200) und einer ausgefahrenen Konfiguration (300) aufweisen, wenn sich die Bügel (140) um die erste Drehachse (142) drehen.

9. Mehrzweckbrille (100) nach Anspruch 1, wobei die Bügel (140) an mehreren vorbestimmten Positionen (199) an Ort und Stelle gehalten werden, wenn sich die Bügel (140) drehen.

## Revendications

1. Lunettes multi-usages (100), comprenant :
une monture (110) qui contient deux lentilles (120) ;
des branches (140) qui s'étendent à partir de la monture (110), chaque branche (140) ayant un premier axe de rotation (142) qui est généralement perpendiculaire à chaque branche (140) et un second axe de rotation (152) qui est orthogonal au premier axe de rotation (142) et permet à chaque branche (140) de pivoter vers le bas par rapport à la monture (110) pour être porté par un utilisateur à des positions multiples (199) des branches (140) ; et
des éléments de charnière (160) qui relient la monture (110) aux branches (140),
dans lesquelles chacun des éléments de charnière (160) comprend une partie d'engagement de monture (162) qui s'engage dans la monture (110) et une partie d'engagement de branche (164) qui s'engage dans les branches (140),
dans lesquelles la partie d'engagement de monture de l'élément de charnière (162) comprend des dents (162a),
dans lesquelles la monture (110) comprend en outre des trous de réception de ressorts de sollicitation de monture (181) qui reçoivent des ressorts de sollicitation de monture (191) qui sollicitent les broches d'engagement des dents (192)
et dans lesquelles les ressorts de sollicitation de monture (191) sollicitent les canaux de sollicitation (193) sur les broches d'engagement des dents (192) contre les dents des éléments de charnière (162a) de sorte que les dents (162a) s'engagent dans les canaux de sollicitation (193) pour maintenir les branches (140) dans l'une des multiples positions (199) autour du second axe de rotation (152) lorsque les branches (140) se déplacent entre une configuration traditionnelle et une configuration étendue.

2. Lunettes multi-usages (100) selon la revendication 1, dans lesquelles la monture (110) comprend en outre des fentes de réception de charnière (151) qui reçoivent la partie d'engagement de monture (162) des éléments de charnière (160).

3. Lunettes multi-usages (100) selon la revendication 2, dans lesquelles les branches (140) comprennent des canaux de réception de charnière (141) qui reçoivent la partie d'engagement de branche (164) des éléments de charnière (160).

4. Lunettes multi-usages (100) selon la revendication 3, dans lesquelles la monture (110) comprend en outre des trous de réception de vis de pivot de monture (153) qui reçoivent des vis de pivot de monture (154) qui définissent le second axe de rotation (152) des branches (140), et dans lesquelles les branches (140) comprennent des trous de réception de vis de pivot de branche (143) qui reçoivent des vis de pivot de branche (144) qui définissent le premier axe de rotation (142) des branches (140).

5. Lunettes multi-usages (100) selon la revendication 4, dans lesquelles les vis de pivot de monture (154) sont reçues dans des écrous à filetage interne (154a) qui s'étendent dans des canaux de réception d'écrous.

6. Lunettes multi-usages (100) selon la revendication 4, dans lesquelles les éléments de charnière (160) comprennent des trous de réception de vis de pivot de monture (163) qui reçoivent les vis de pivot de monture (154), et comprennent en outre des trous de réception de vis de pivot de branche (165) qui reçoivent les vis de pivot de branche (144).

7. Lunettes multi-usages (100) selon la revendication 1, dans lesquelles la partie d'engagement de branche d'élément de charnière (164) comprend des cames (164a).

8. Lunettes multi-usages (100) selon la revendication 7, dans lesquelles les branches (140) comprennent des trous de réception de ressort de sollicitation de branche (185) qui reçoivent des ressorts de sollicitation de branche (186) qui sollicitent des broches d'engagement de came (187), dans lesquelles les ressorts de sollicitation de branche (186) sollicitent les broches d'engagement de came (187) contre les cames (164a) de sorte que les branches (140) ont un mouvement de sollicitation de came entre une configuration pliée (200) et une configuration étendue (300) lorsque les branches (140) tournent autour du premier axe de rotation (142).

9. Lunettes multi-usages (100) selon la revendication **1,** dans lesquelles les branches (140) sont maintenues en place à de multiples positions prédéterminées (199) lorsque les branches (140) tournent.
